# EUROPEAN PATENT SPECIFICATION

(11) **EP 2 192 969 B1**
(45) Date of publication and mention of the grant of the patent: **29.04.2015**
(21) Application number: 08783017.0
(22) Date of filing: 28.08.2008
(51) Int. Cl.: B01D 53/02, B01J 20/20

(54) **ARTICLE FOR EXTRACTING A COMPONENT FROM A FLUID STREAM, METHODS AND SYSTEMS INCLUDING SAME**
GEGENSTAND ZUR EXTRAKTION EINER KOMPONENTE AUS EINEM FLUIDSTROM, VERFAHREN UND SYSTEME DAMIT
ARTICLE POUR EXTRAIRE UN COMPOSANT D'UN ÉCOULEMENT DE FLUIDE, PROCÉDÉS ET SYSTÈMES INCLUANT CET ARTICLE

(30) Priority: 28.08.2007 AU 2007904651 P
(43) Date of publication of application: 09.06.2010
(73) Proprietor: Commonwealth Scientific and Industrial Research Organisation, Campbell, Australian Capital Territory 2612 (AU)
(72) Inventor: SU, Shi, Indooroopilly, Queensland 4068 (AU); THIRUVENKATACHARI, Ramesh, Indooroopilly, Queensland 4068 (AU)
(74) Representative: Finnie, Peter John
(86) International application number: PCT/AU2008/001269
(87) International publication number: WO 2009/026637

(56) References cited:
- EP-A1- 1 413 348
- DE-A1-102005 032 345
- US-A- 5 656 065
- US-A- 5 925 168
- US-A1- 2006 133 975
- US-B1- 6 258 300
- US-B2- 7 250 074
- US-B2- 7 291 271

## Description

### Field of the Invention

The present invention relates to articles for extracting at least one component from a fluid stream. The present invention also relates to a method of forming such articles and methods and systems including same.

### Background to the Invention

It is often desirable to extract or capture a component or components from a fluid stream, particularly where the fluid stream is a gas emission from a process which contains compounds which are harmful to humans and/or the environment. Examples of such compounds are carbon dioxide (CO₂) and methane (CH₄), which have been attributed as the two major sources of the greenhouse effect. CO₂ is emitted into the atmosphere from various sources, including fossil fuel (coal, oil and gas etc.) fired power stations, and heating furnaces. Fugitive CH₄ emissions occur from coal, oil and gas production as well as transport, mining, agriculture, waste disposal, livestock, and land use (forestry). Whilst much development is currently being made on reducing CO₂ and CH₄ emissions, an alternative approach to mitigating the effects of these gases is to capture them for sequestering or, in the case of CH₄, utilisation as a fuel source.

To this end, several different technologies have evolved to separate and capture CO₂ from flue gas and CH₄ from mine ventilation air, such as amine scrubbing, cryogenic separation, membrane separation and absorption. However, these technologies have encountered problems in specifically targeting and capturing CO₂ and CH₄. Furthermore, these technologies do not excel in treating gas emissions produced in high dust environments such as exhibited in flue gas from coal-fired power stations or ventilation air from coal mines. Furthermore, in order for a stream of captured CH₄ to be useful as a fuel source for conventional gas engines, the concentration of CH₄ should be approximately 30% or higher. This requirement has proven difficult for the aforementioned technologies to satisfy, particularly as the untreated gas emissions typically have a CH₄ concentration of less than 1%. Removal of CO₂ or N₂ from natural and mine drainage gases is also required during purification to indirectly increase the CH₄ concentration of the gas.

Another approach to capture components from a fluid stream has been through adsorption of the components on activated carbon structures. Bulk, typically cylindrical, or flat plate carbon monoliths have been formed from carbonisable binders and subsequently dried, cured, carbonised and activated. The formed activated carbon monolith is quite porous, and can therefore be used for adsorbing a component or components from a fluid by passing the fluid over the monolith. For example, US 6,258,300 and US 6,030,698 (both to Burchell et al.) disclose an activated carbon fibre composite made up of rigidly bonded carbon fibres to form an open, permeable, rigid monolith with a controlled pore structure. US 6,090,477 (Burchell et al.) teaches a series of hybrid carbon fibre monoliths made from a blend of isotropic and mesophase pitch derived carbon fibres which possess enhanced thermal conductivity over conventional activated carbon fibre composites and granular activated carbons. US 5,972,077 (Judkins et al.) teaches an apparatus and method that involves the adsorption of CO₂ and H₂S onto a carbon fibre composite molecular sieve. The adsorbed gas is then desorbed via an electric swing technique. US 5,925,168 (Judkins et al.) discloses a method for separating gases, in particular N₂ and O₂, the method involving application of a electrical and magnetic field to a carbon fibre composite adsorption material to preferentially attract certain gases. Desorption of the gas is affected via either an electric or pressure swing process.

EP-A-1413348 discloses the use of an adsorbent sheet material, having a large percentage of adsorbent particles, as a parallel passage contactor element.

DE 10 2005 032 345 A1 discloses a honeycomb monolith structure for adsorbing a component from a fluid stream; the honeycomb monolith structure is formed by extrusion from a slurry containing a mixture of a binder and carbon fibres; width of the honeycomb channels (bores) of 6.5 mm and 4.8 mm and of separating walls of up to 1 mm are disclosed.

Alternative structures have also been proposed including a monolith substrate coated or impregnated with carbon materials that are subsequently dried, cured, carbonised and activated. The substrates are typically ceramics, metals or other materials which provide sufficient strength for the activated carbon. However, the substrates in these monoliths are relatively expensive, in particular ceramic monolith substrates. Furthermore, the metal substrates are particularly susceptible to a loss of performance and durability through poisoning by sulphur, trace lead and other compounds which may be present in the fluid flowing through the monolith. Additionally, the carbon coating may erode from the substrate, creating uneven surfaces inside the monolith and concomitant blockage of pores within the structure.

The present invention aims to provide alternative articles for capturing one or more components from a fluid stream, in particular CO₂ from flue gases and CH₄ from mine ventilation air. Furthermore, the invention aims to provide methods for forming the articles and systems employing the articles.

### Summary of the Invention

According to a first aspect of the present invention there is provided an article for extracting a component from a fluid stream as set out in claim 1.

As used herein the term "bore" includes within its scope individual discrete channels extending through the body portion and includes connected channels that form a network extending within and through the body portion. The term includes channels formed subsequent to formation of the body portion, for example by drilling or the like, and also includes channels formed during formation of the body portion, for example during extrusion or moulding of the body portion.

The structure of the body portion may take any suitable form.
The component that is to be extracted from the fluid stream may be captured anywhere on the body portion by adsorption. More preferably, the component to be extracted is captured onto the inner surfaces of the bores of the body portion of the article by adsorption.

The bores may be arranged in any way that is suitable for flow therethrough of the fluid stream. This will be appreciated from the above definition for the bores.

The width, which as used herein includes reference to diameter, of each bore is preferably from about 1 mm to about 40mm. More preferably, the width of the bores is from about 1 mm to about 10mm and even more preferably from about 1 mm to about 8mm or from about 1 mm to about 6mm. Most preferably, the width of the bores is from about 3mm to about 6mm. It will be appreciated by one skilled in the art that the width of some or all of the bores may or may not be constant across the length of the bores. Preferably, the width of the bores is constant across the length of the bores. Furthermore, the width of bores within the body portion may or may not be uniform. In certain embodiments it may be desirable that all of the bores in the body portion be of identical or similar width. In other embodiments, it may be desirable that some bores have a larger width than others. This may be somewhat dependent on the particular field of use, or volume of fluid to be extracted.

The bores may be of regular or irregular cross sectional shape. Preferably, the bores are regular in cross sectional shape and extend from one face of the body portion to an opposing face of the body portion. Preferably, the bores are substantially parallel to one another. The cross sectional shape of the bores is not intended to be limited in any way. For example, the bores may have a square, triangular, circular, hexagonal, octagonal or pentagonal cross sectional shape. Preferably, the bores have a circular or square cross sectional shape.

The body portion includes internal walls that define the bores and that separate them from one another. The width of the internal walls is preferably from about 1mm to about 150mm. More preferably, the width of the internal walls is from about 2mm to about 30mm, and even more preferably from about 2mm to about 10mm. It will be appreciated that the width of the internal walls may or may not be constant along their length. Preferably, the width of the internal walls is constant along the length of the internal walls. Moreover, the width of individual internal walls may differ compared with other internal walls. Preferably, all of the internal walls are of identical or similar width. Of course, it will be appreciated that the width and cross sectional shape of the plurality of bores will affect the width and shape of the internal walls (and vice versa).

The shape and configuration of the body portion is not particularly limited. For example, the body portion may be cubic, cylindrical or prismatic in shape. In certain embodiment, it is envisaged that the body portion may be a prism of triangular, square, pentagonal, hexagonal, or octagonal shape. Generally, the body portion is cylindrical such that the body portion complements a chamber in which it is fitted.

The carbon fibres may, for example, be pitch based, activated pitch based, polyacrylonitrile (PAN) based, rayon (viscose) based or any combination thereof. In the case of pitch based carbon fibres, the pitch based carbon fibres may be isotropic and/or mesophase pitch based. Further, the pitch based carbon fibres may be derived from petroleum or coal tar.

In addition, the carbon fibres may be chopped or milled. It is also possible to incorporate a mixture of chopped and milled carbon fibres into the body portion.

The carbon fibres may be of any length, but are preferably from about 5µm to about 5000µm in length. More preferably, the carbon fibres are from about 100µm to about 2000µm in length. Similarly, the diameter of the carbon fibres is not particularly limited. Typically, the carbon fibres have a diameter of from about 5µm to about 50µm and more preferably from about 10µm to about 30µm.

The carbon nanotubes may be single walled or multiwalled. In addition, the carbon nanotubes may be chopped or milled. It is also possible to incorporate a mixture of chopped and milled carbon nanotubes into the body portion.

The carbon nanotubes may be from about 10nm to about 100nm in diameter. Alternatively, the diameter of the carbon nanotubes may be from about 10nm to 40nm, or 40nm to 70nm, or even from about 70nm to 100nm.

The carbon nanotubes are typically between about 100µm to 2500µm in length. Optionally, the length of the carbon nanotubes is between about 100µm to 600µm, or 600µm to 1300µm, or 1300µm to 1800µm, or even from about 1800µm to 2500µm.

Without wishing to be bound by any theory, it is believed that including carbon nanotubes in the mixture provides an article with a relatively more open structure and uniform pore size which is preferential to CO₂ or CH₄ than articles prepared from mixtures that only include carbon fibre.

The binder serves to bind the carbon fibres together enabling the formation of the body portion. The binder may be a resin selected from phenolic resin, polyethylene, epoxy resin, vinyl ester resin or any combination thereof. If the resin is a phenolic resin, this may be formed from phenol, methylphenol, ethylphenol, propylphenol, isopropylphenol or dimethylphenol. Phenolic resins are especially suitable for withstanding temperatures up to about 150 °C which may be required during drying and curing of the article, as described below. In a preferred embodiment the resin is a carbon based resin so that it is carbonisable during further treatment of the body portion. A mixture of different types of resins may also be used.

The ratio of carbon fibre to binder in the mixture used to form the body portion is not particularly limited. For example, the ratio may range from about 9:1 to 1:9. Preferably, the ratio of carbon fibre to binder is from about 4:1 to 1:4. More preferably, the ratio of carbon fibre to binder ranges from about 2:1 to 1:2.

Similarly, the ratio of carbon nanotube to binder in the mixture used to form the body portion is not particularly limited. For example, the ratio may range from about 9:1 to 1:9. Preferably, the ratio of carbon nanotube to binder is from about 4:1 to 1:4. More preferably, the ratio of carbon nanotube to binder ranges from about 2:1 to 1:2.

As stated above, both carbon fibres and carbon nanotubes may be included in the mixture used to form the body portion. In this case, the ratio of carbon fibres to carbon nanotubes is not particularly limited. For example, the ratio of carbon fibres to carbon nanotubes may be about 9.5:0.5. Alternatively, the ratio of carbon fibres to carbon nanotubes may be about 9:1 or 8.5:1.5 or 7:3 or 6:4 or 1:1.

It will be appreciated that carbon fibres, carbon nanotubes and a binder may be included in the mixture. The ratio of carbon fibres, carbon nanotubes and binder is again not particularly limited. For example, the ratio of carbon fibres to carbon nanotubes to binder may be about 0.99:0.01:9 or 9.9:0.1:1 or 0.99:0.01:2 or 0.99:0.01:0.5 or 0.9:0.1:2 or 0.9:0.1:0.5 or 0.5:0.5:2 or 1:1:1.

The article may be used to extract any particular component, or components, from the fluid stream. In one embodiment, the article extracts CO₂ from the fluid stream. Alternatively, the article may extract CH₄ from the fluid stream. More preferably, however, the article extracts CO₂ and CH₄ from the fluid stream.

The source of the fluid stream, and therefore the source of the CO₂ and/or CH₄, is not particularly limited. Preferably, the article is capable of extracting CO₂ from flue gas derived from a coal fired power station. With respect to CH₄, the article is advantageously capable of extracting CH₄ from the ventilation air of a coal mine.

A second aspect the invention provides a system for extracting a component from a fluid stream as set out in claim 9.

Generally, as will be appreciated from the above discussion, the system is a system for extracting CO₂ from flue gas derived from a coal fired power station or a system for extracting CH₄ from ventilation air derived from a coal mine.

The system may include one article or more than one article. The number of articles will depend on what is desired or required for a particular application. In a system which includes two articles, during operation one article may receive the fluid stream for extraction of the desired component, for example by adsorption, while a second article is undergoing desorption of the extracted component and is readied for adsorption again. As such, each of the two articles may cycle between an adsorption stage and desorption stage, each stage being offset relative to one other. Once desorption of the second article is completed and ready for adsorption, the fluid feed is re-directed from the first article to the second article when the first article is saturated at a predetermined level. Desorption of the first article may then commence. As noted above, and as will be readily appreciated by those of skill in the art, the system of the invention may include many more articles as necessary for a particular application. For example, where the system includes three articles, during operation of the system one article may receive the fluid stream for extraction of the desired component, while a second article desorbs the extracted component and the third article is either kept on stand-by to receive the fluid stream or is being readied for another adsorption cycle.

The swing apparatus may effect a thermal, electrical or pressure / vacuum swing across the at least one article. A thermal swing may be achieved by any suitable heat source, for example by passing a hot flue gas over the article or contacting the article with an electrical heating element. Optionally, a coolant source is included to lower the temperature of the article following thermal desorption. The article may be cooled prior to or simultaneously with re-introduction of the fluid stream. An electrical swing may be brought about under the influence of an electrical current supplied by wires connected to opposing ends of the article. A pressure / vacuum swing may be achieved by using a vacuum pump to create a pressure drop over the article in order to effect desorption. It will be appreciated that the system may include one or more thermal, electrical or pressure / vacuum swing apparatuses or a combination thereof.

If heat exchange is desired, whether during an adsorption or desorption stage, the system may include at least one conduit, more preferably a plurality of conduits, which extends through a bore of the article. A heat exchange fluid may be passed through the conduit(s) as desired such that it is brought into indirect contact with the article along the length of the article. This may advantageously facilitate heat exchange between the article and the heat exchange fluid. According to this embodiment of the invention, the conduit may optionally be larger in diameter or width and pass through an annulus formed in the article. In that case, the bores extending through the article are located in the annulus surrounding the conduit through which the heat exchange fluid may pass.

The at least one article is preferably positioned such that the bores extending through the article are parallel with the flow of the incoming fluid stream. Thus, resistance to the flow of the fluid stream through the article(s) is minimised. Other than with regard to the direction of flow of the fluid stream as mentioned above, the orientation of the article(s) is not particularly limited. For example, the article(s) may be horizontally or vertically mounted to facilitate either substantially horizontal or vertical introduction of the fluid stream into and through the bores of the article(s). Generally, the at least one article is orientated so that the fluid stream flows substantially vertically through the bores in the body portion of the at least one article.

The system, in use, may operate continuously or non-continuously. Preferably, the system operates continuously.

If desired, the system may further include a source of purge fluid for flushing the desorbed component from the article(s). The source of purge fluid may be used in conjunction with an electrical, thermal or pressure / vacuum swing apparatus to assist desorption. Preferably, the purge fluid is a gas such as argon, nitrogen, helium, air and the like. Ideally, the at least one component desorbed from the at least one article into the purge fluid is at a higher concentration than as present in the fluid stream.

According to a third aspect of the invention there is provided a method of extracting CO₂ from flue gas as set out in claim 14.

According to a fourth aspect of the invention there is provided a method of extracting CH₄ from ventilation air as set out in claim 16.

It will be appreciated that any feature described above in relation to the first aspect of the invention will be equally applicable to the second, third and fourth aspects of the invention.

The articles of the invention may be prepared by any suitable method. However, there is further provided a method of forming an article for extracting a component from a fluid stream as set out in claim 17.

The method may also include the step of chopping or milling the carbon fibres. If so, this preferably occurs prior to mixing the carbon fibres with the binder to form the slurry. It will also be appreciated that the carbon fibres may be both chopped and milled prior to mixing with the binder. Optionally, the method includes the step of blending different types of carbon fibres. Again, such blending preferably takes place prior to mixing the carbon fibres with the binder.

The method may also include the step of chopping or milling the carbon nanotubes. If so, this preferably occurs prior to mixing the carbon nanotubes with the binder to form the slurry. It will also be appreciated that the carbon nanotubes may be both chopped and milled prior to mixing with the binder. Optionally, the method includes the step of blending different types of carbon nanotubes. Such blending preferably takes place prior to mixing the carbon nanotubes with the binder.

It will of course be appreciated that the method may include the step of mixing chopped or milled carbon fibres with chopped or milled carbon nanotubes. Preferably, this occurs prior to mixing with the binder to form the slurry.

Generally, the slurry is formed by adding water to a mixture of the binder and the carbon fibres and / or carbon nanotubes. Further additives may be added to the carbon fibres and / or carbon nanotubes and binder to enhance the selectivity of the body portion towards adsorption of the component from the fluid stream.

Shaping of the slurry may include, for example, vacuum moulding or extrusion. During vacuum moulding or extrusion of the slurry, excess water present is removed.

The method also advantageously includes the step of drying the body portion once it has been shaped. Any suitable temperature may be used to dry the body portion. Preferably, however, during drying the body portion is heated from about 50 to about 100°C and more preferably from about 50 to about 70°C. Drying may take up to 24 hours, but more preferably takes only 1 to 3 hours.

Advantageously, the method also includes the step of curing the body portion. Curing may involve either constant or gradual stepwise increases in temperature. For example, the body portion may be heated to from about 100 to about 150°C. In general, curing may take up to 24 hours. Preferably, curing may take between about 1 to 10 hours and even more preferably 1 to 5 hours.

The method may also include the step of carbonization of the body portion. During carbonization, the temperature of the body portion is slowly raised to from about 500°C to 1000°C and more preferably from about 650°C to 850°C. Carbonization ordinarily occurs over a period of 1 to 10 hours, preferably in the presence of an inert gas such as nitrogen or argon.

Without wishing to be bound by any theory, it is thought that during carbonisation the resin matrix of the body portion is transformed into a glassy carbon. Furthermore, it is believed that the porosity of the body portion depends *inter alia* on the carbonisation conditions.

The method may also include the step of activation of the body portion. During activation, the body portion is heated from about 600°C to 1500°C in the presence of an activating agent. More preferably, the body portion is heated from about 650°C to 950°C. Activation may result in the formation of narrower pores with a concomitant increase in the adsorption capacity of the article. During the step of activation, the body portion may lose up to 75% of its mass. The mass lost during the step of activation may be referred to as 'burn-off'.

The activating step may be a thermal or chemical activation step. Examples of thermal activation steps include flowing thermal activating agents such as steam, carbon dioxide, nitrogen, moisture saturated helium or any combination thereof through the body portion. Alternatively, the step of chemical activation includes impregnating the body portion with chemical activating agents such as alkaline hydroxides (e.g. sodium or potassium hydroxide), phosphoric acid, metal chloride (e.g. zinc chloride), potassium sulphide or any combination thereof. Moreover, chemical activation may also include heating the body portion impregnated with the chemical activating agent at a first temperature for a first period of time followed by heating at a second temperature for a second period of time. Preferably, the second temperature is higher than the first temperature. For example, the first temperature may be approximately 120°C and the first period of time approximately 10 hours. Optionally, heating at the first temperature occurs in the presence of an inert gas such as nitrogen or argon. This is advantageously followed by treatment at a second temperature of from about 500°C to 800°C for the second period of time which is approximately 30 minutes.

### Brief Description of the Drawings

The following embodiments and examples are according to the invention only in so far as carbon nanotubes are comprised.

Embodiments of the present invention will now be described, by way of example only, with reference to the accompanying drawings, in which:
Figure 1 is a perspective view of an article for extracting at least one component from a fluid stream according to an embodiment of the present invention, including a plan view of the inlet of a bore which extends through a body portion of the article;
Figure 2 is a perspective view of an article for extracting at least one component from a fluid stream according to an alternative embodiment of the present invention;
Figure 3 is a flow sheet for a method of forming an article for extracting at least one component from a fluid stream according to an embodiment of the present invention;
Figure 4 is a schematic view of a system according to an embodiment of the present invention;
Figure 5 is a schematic view of another system of the invention with an integrated thermal swing apparatus;
Figure 6 is a schematic view of another system of the invention with an integrated electrical swing apparatus;
Figure 7 is a schematic view of yet another system of the invention with an integrated vacuum swing apparatus;
Figure 8 illustrates an embodiment of an article with a plurality of conduits for heat transfer purposes;
Figure 9 is a photograph of an article for capturing at least one component from a fluid stream according to an embodiment of the present invention;
Figure 10 is a scanning electron microscope (SEM) image of a body portion of an article for capturing at least one component from a fluid stream according to an embodiment of the present invention;
Figure 11 is a graph showing the effect of burn-off on the physical characteristics of an article according to an embodiment of the present invention;
Figure 12 is a graph showing the effect of burn-off on the CO₂ adsorption capacity of an article according to an embodiment of the present invention;
Figure 13 is a graph showing the effect of burn-off on the CH₄ adsorption capacity of an article according to an embodiment of the present invention;
Figures 14 and 15 show the CO₂ adsorption capacity at 25°C of articles prepared with different carbon fibres in accordance with the present invention in relation to their mass uptake (Figure 14) and volume of gas adsorbed (Figure 15);
Figures 16 and 17 show the CH₄ adsorption capacity at 25°C of articles prepared with different fibres in accordance with the present invention in relation to their mass uptake (Figure 16) and volume of gas adsorbed (Figure 17);
Figure 18 is a graph of a comparison of CO₂ adsorption performance at 0°C (based on the volume of CO₂ adsorbed per gram of material) between an activated pitch based article of the present invention, a metal-organic crystal material known as a zeolitic imidazolate framework (ZIF) as disclosed by Banerjee R. et al., Science, 2008, 319, pages 939-943, and conventional activated carbon pellets;
Figure 19 is a graph showing the kinetic adsorption of three different types of articles of the present invention under the influence of a simulated flue gas operated at atmospheric pressure and room temperature (25°C);
Figure 20 is a graph showing the kinetic adsorption profile and outlet flow rate profile of an activated petroleum pitch based article of the present invention under the influence of a simulated flue gas at atmospheric pressure and ambient temperature (25°C);
Figures 21 and 22 show the adsorption kinetics of a petroleum pitch based article of the present invention under the influence of two ventilation air methane gas mixtures at atmospheric pressure and ambient temperature (25°C); and
Figure 23 is a graph showing the kinetic adsorption profile of a coal tar pitch based article of the present invention under the influence of two ventilation air methane gas mixtures at atmospheric pressure and ambient temperature (25°C).

### Detailed Description of the Invention

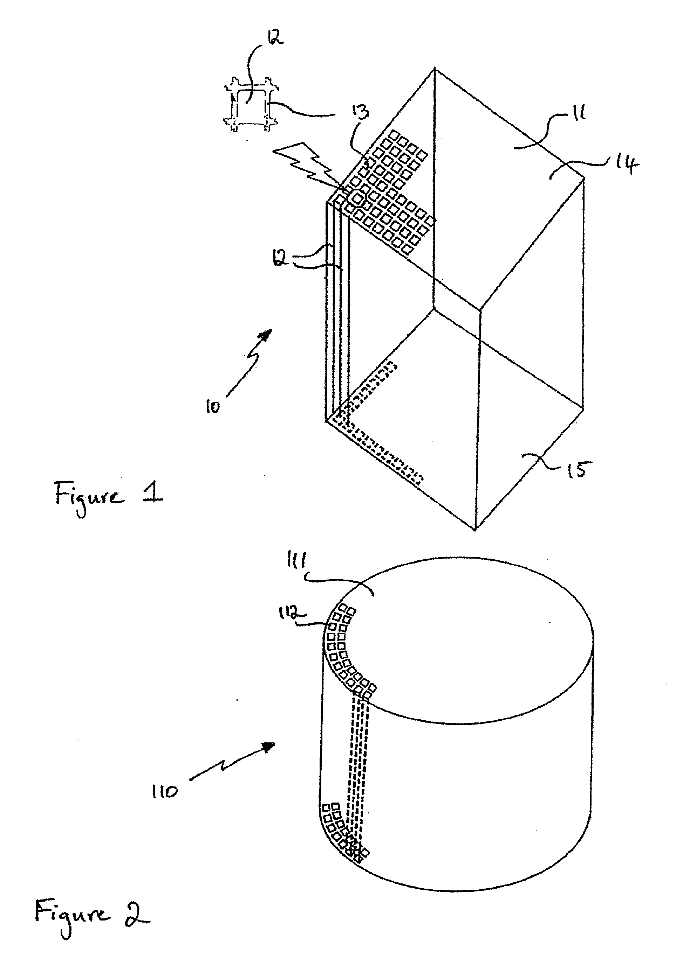

Referring firstly to figure 1, an article 10 for capturing at least one component from a fluid stream is shown. The article 10 includes a body portion 11 having a plurality of bores 12 which extend through the body portion 11. The bores 12 facilitate relatively uninhibited flow of the fluid stream through the body portion 11. The article 10 is designed to extract at least one component from the fluid stream by adsorption of the at least one component on internal walls 13 defining the bores 12 of the body portion 11.

Advantageously, it has been found that articles 10 formed from a binder and carbon fibres and / or carbon nanotubes are substantially easier to handle relative to, for example, granular activated carbon or non-bound carbon fibres. Furthermore, because of the inclusion of the bores 12, the pressure drop across the article 10, in use, is relatively low compared with the prior art. Still further, the article 10 has a further advantage over various prior art substrates in that it contains a comparatively high surface area to volume ratio.

As noted above, the body portion includes internal walls 13 that define and separate the plurality of bores 12 from one another. The bores 12 extend from a first end face 14 of the body portion 11 to a second end face 15 of the body portion 11. The plurality of bores 12 are shown substantially parallel to one another, although they need not be. It is also noted that although in Figure 1 only a part of the body portion 11 is shown having bores 12 extending therethrough, typically the bores 12 form a matrix that extends across most, if not all of the body portion 11.

The width, or in the case of circular bores diameter, of each of the plurality of bores 12 is from 1mm to 40mm. The width of the internal walls 13 which define the bores 12 is from 1 mm to 150mm. However, it is noted that the width of the bores 12 (and hence of the internal walls 13) need not be constant across the length of the bores 12. Likewise, the bores need not be of uniform cross sectional shape within the matrix of bores 12.

In Figure 1, the article 10 is shown having a cubic body portion 11 with bores 12 which are square in cross-section. Referring to Figure 2, an article 110 for capturing at least one component from a fluid is shown which is identical to the article 10 of Figure 1, except that it has a cylindrical body portion 111. It is noted, however, that the body portions of articles according to the present invention are not limited to any particularly shape, nor are the plurality of bores limited to any particular cross sectional shape.

The ratio of carbon fibres and / or carbon nanotubes to binder and the type of carbon fibres and / or carbon nanotubes employed, and in what ratios, may be decided depending on the desired properties of the article 10. For example, properties of interest may include strength, porosity, size, volume and size distribution of pores, size of bores and side walls, and adsorption capacities. The desired properties for a particular article may be somewhat dependent on the component or components which the article is to extract from the fluid stream and the conditions in which it is intended to operate. For example, selection of the above properties may be dependent on the operating temperature or pressure in use, levels of dust in the fluid stream, fluid stream flow rate, the concentration of the component(s) in the fluid stream, and the presence of various impurities in the fluid stream. Table 1 below shows some suitable carbon fibre-binder combinations which may be used in making the article for the capture of CO₂ and/or CH₄.

**Table 1. Suitable carbon fibre-binder and carbon fibre-carbon nanotubebinder combinations for articles intended for CO₂ and/or CH₄ extraction.**

| **Mixture** | **Ratios** |
|---|---|
| Pitch:Binder | 1:1, 1:2, 4:1, 9:1, 1:2, 1:4, 1:9 |
| Activated Pitch:Binder | 1:1, 1:2, 4:1, 9:1, 1:2, 1:4, 1:9 |
| PAN:Binder | 1:1, 1:2, 4:1, 9:1, 1:2, 1:4, 1:9 |
| Rayon:Binder | 1:1, 1:2, 4:1, 9:1, 1:2, 1:4, 1:9 |
| PAN:Pitch:Binder | 1:1:2, 1:1:1, 2:2:1, 1:4:5, 4:1:5 |
| PAN:Rayon:Binder | 1:1:2, 1:1:1, 2:2:1, 1:4:5, 4:1:5 |
| Pitch:Rayon:Binder | 1:1:2, 1:1:1, 2:2:1, 1:4:5, 4:1:5 |
| PAN:Pitch:Rayon:Binder | 1:1:1:1 |
| Carbon Fibre:Carbon | 0.99:0.01:9, 9.9:0.1:1, 0.99:0.01:2, 0.99:0.01:0.5, 0.9:0.1:2, 0.9:0.1:0.5, 0.5:0.5:2, 1:1:1 |
| Nanotubes: Binder | |

The article 10 for capturing at least one component from a fluid may be formed in a method which includes the steps of mixing the carbon fibres and / or carbon nanotubes with the binder to form a slurry, shaping the slurry of fibres and binder into the body portion 11 with the plurality of bores 12 which extend through the body portion 11. The mixture of carbon fibres and binder may be any of the combinations of different types of carbon fibre and binders as described above. The ratio of carbon fibre to binder is not limited to any specific range. Typically, the step of shaping the mixture occurs by vacuum moulding or extrusion.

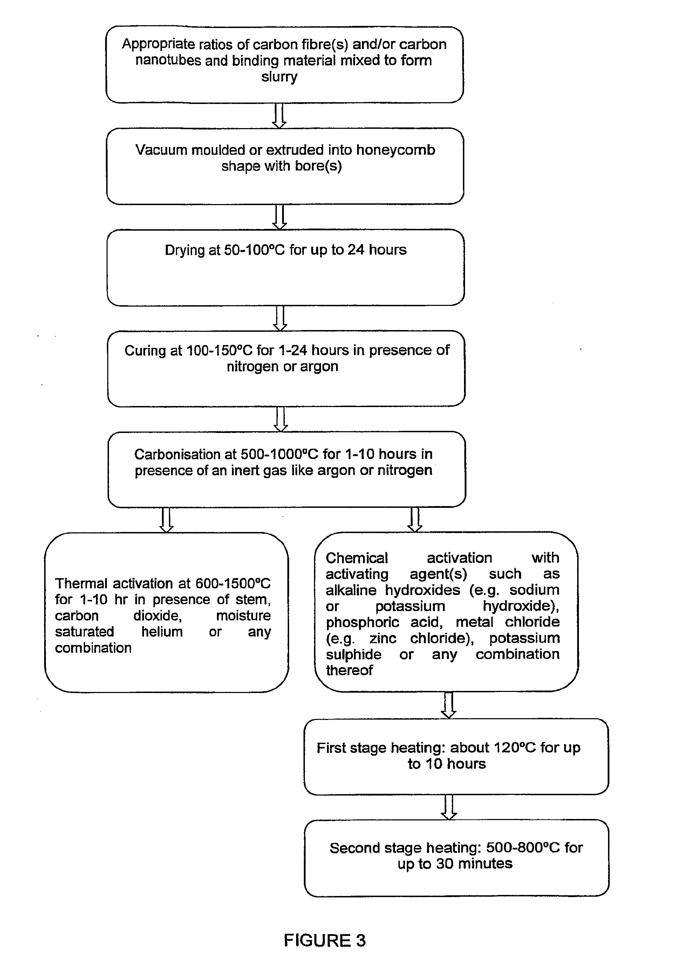

Figure 3 shows further details of a method for forming the article 10. The method may also include the step of adding water to the mixture of the binder and carbon fibres and / or carbon nanotubes. This enables the formation of a flowable yet mouldable slurry. During vacuum moulding of the mixture, the water is filtered out from the mixture.

In an embodiment, the method may also include the step of introducing additives to the mixture of carbon fibres and / or carbon nanotubes and binder to enhance the selectivity of the body portion 11 towards adsorption of the at least one component.

The method of forming the article also typically includes the steps of drying, curing, carbonisation and/or activation. The step of drying includes heating the body portion 11 to 50 to 100°C (preferably 50 to 70°C) in an oven for approximately 24 hours. The step of curing, which follows the step of drying, includes further heating of the body portion 11 to 100 to 150°C for approximately 1 to 24 hours. More preferably, the curing step takes approximately 1 to 10 hours and even more preferably 1 to 5 hours. Curing occurs in a muffle furnace with a stepwise gradual increase in temperature.

Following the step of curing, the step of carbonisation includes slowly raising the temperature of the body portion to 500-1000°C over a period of 1 to 10 hours. The step of carbonisation is carried out in the presence of an inert gas (for example nitrogen or argon).

The step of activation, which follows the step of carbonisation, includes heating the body portion at 600 to 1500°C (preferably 600 to 1000°C), in the presence of an activating agent. During the step of activation, the body portion 11 may lose 0-75% of its mass ("burn-off"). The step of activation may include a thermal or chemical activation step. Thermal activation may include flowing thermal activating agents such as steam, carbon dioxide, nitrogen, moisture saturated helium or any combination thereof through the body portion 11. Chemical activation may include impregnating the body portion 11 with chemical activating agents such as alkaline hydroxides (e.g. sodium or potassium hydroxide), phosphoric acid, metal chloride (e.g. zinc chloride), potassium sulphide or any combination thereof. During chemical activation, the impregnated body portion 11 is first heated to approximately 120°C for approximately 10 hours before being heated to 500-800°C up to 30 minutes.

The choice of activating agent, its concentration and flow rate may be chosen to achieve a particular desired property (or properties) of the article 10. Likewise, the temperature employed during activation and the "burn off" percentage may also dictate desired properties of the article 10. Such properties may include strength, surface area, porosity, size of pores and adsorption capacity.

The article 10 may be used to extract at least one component from a fluid stream by adsorption onto inner walls 13 of the bores 12 of the article 10. The captured component(s) can be subsequently desorbed from the article 10 by a pressure / vacuum, thermal or electrical swing to produce a concentrated stream of the captured component(s). The concentrated stream of captured component(s) may be subsequently utilised or stored (i.e. in the case of CH₄), or may be sequestered (i.e. in the case of CO₂).

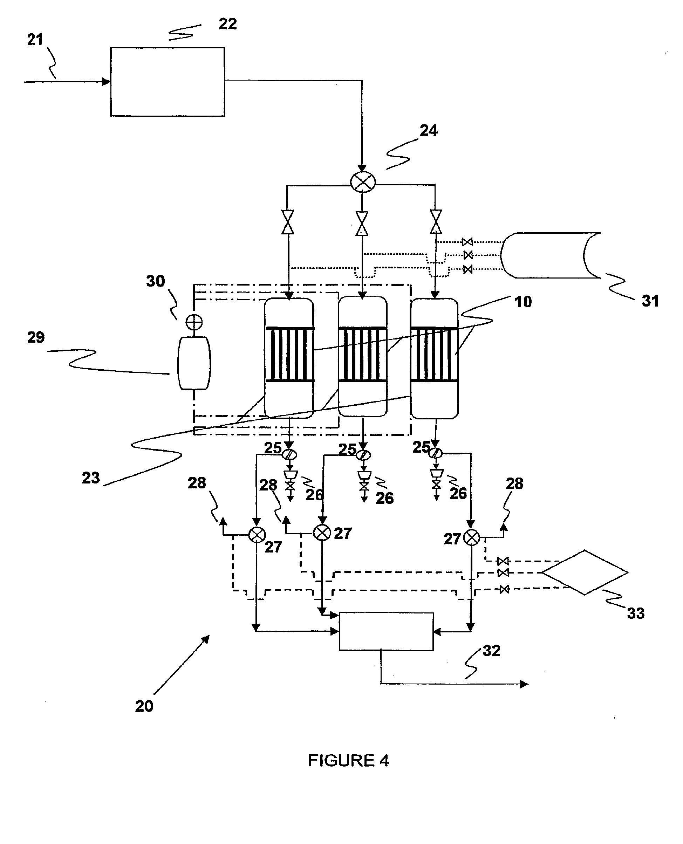

Referring now to Figure 4, a system is shown including a fluid feed 21 to a pre-treatment stage 22 for treatment of the fluid feed 21 prior to it flowing to one of the adsorption chambers 23 for the capture of at least one component from the fluid feed 21 by adsorption. The fluid feed 21 may include fugitive CH₄ or flue gas from a fossil fuel fired power station. The pre-treatment stage 22 may include one or more treatments to remove various unwanted components which may be present in the fluid feed 21 and which may cause downstream operational problems in the system 20. These treatments may include a particle removal treatment such as filtration or ESP (electrostatic precipitation) to remove dust and other particulate matter, a moisture removal treatment to remove water, and treatments to remove other harmful or toxic impurities, such as scrubbing to remove sulphur. The pre-treatment stage 22 may also include compression of the fluid feed 21 to raise the pressure of the fluid feed 21. It is noted that in some instances, the system 20 does not require the pre-treatment stage 22 for the fluid feed 21.

Each of the adsorption chambers 23 contains an article 10 as described above for capturing the component(s) from the fluid. The articles 10 are arranged in the chambers 23 so that the fluid flows substantially vertically through the bores 12 in the body portion 11 of each of the articles 10. However one of ordinary skill in the art will appreciate that the orientation of the articles 10 is not particularly critical to the operation of the system. For example, the chambers 23 and articles 10 therein may be arranged so that the fluid flows substantially horizontally through the bores 12. In Figure 4, the system 20 includes three adsorption chambers 23. However, the system 20 may include any number of adsorption chambers 23, even only one or two such chambers. Ideally, the system 20 includes at least three chambers 23 so that at any time during operation of the system one chamber is receiving the fluid feed 21 for adsorption, a second chamber is desorbing the captured component(s) and the third chamber is on stand-by to receive the fluid feed 21 or in an intermediate state between adsorption and desorption. The system 20 can thus operate continuously. To that end, the system 20 includes an inlet control valve 24 which regulates the fluid flow to the different adsorption chambers 23.

The system 20 may also include particle separators 25 at the outlets of the adsorption chambers 23 to remove any dust or other particulate matter from fluid flowing out of the adsorption chambers 23, which is subsequently collected in dust hoppers 26. The particle separators 25 may be filters or inertial separators for example. Although each adsorption chamber 23 is shown having its own particle separator 25 and dust hopper 26. A single particle separator and a single dust hopper may be used to treat the fluid flowing from all the adsorption chambers 23. It is noted also that the system 20 may not require the particle separators 25 and dust hoppers 26 either because the fluid feed 21 does not contain any dust or other particulate matter or because any such matter has been removed from the fluid in the pre-treatment stage 22.

The system 20 also includes an outlet control valve 27 for each of the adsorption chambers 23 which directs spent fluid to waste 28 (to vent where the fluid is a gas) following capture of the component(s) in the adsorption chamber 23.

The system 20 also includes a swing apparatus 29 for providing a thermal, electrical or pressure swing across the articles 10 located in the adsorption chambers 23. A switch 30 controls the operation of the swing apparatus 29.

During operation of the system 20, the inlet control valve 24 directs the fluid feed 21 to one of the adsorption chambers 23 for capture of the component(s) from the fluid by the article 10. As the article 10 approaches a saturation point the adsorption rate decreases. At a predetermined level of adsorption, the inlet control valve 24 closes flow of the fluid feed 21 to that adsorption chamber and directs it to another. The switch 30 triggers operation of the swing apparatus 29, which subsequently provides a thermal swing (effects a higher or lower temperature), electrical swing (effects a reversal in polarity or a change from being neutral to polar or vice versa) or a pressure swing (effects a change in the pressure) across the article 10. This causes the captured component(s) to desorb from the article 10.

A source of purge fluid 31 is provided to flush the desorbed component(s) from the chamber 23. The purge fluid 31 may be a gas such as argon nitrogen, helium, air and mixtures thereof. The flow rate of purge fluid 31 is typically selected to ensure the concentration of the captured component(s) exiting the chamber 23 is not excessively diluted. The outlet control valve 27 subsequently directs the concentrated component(s) stream 32 to a further system (not shown) for sequestration, use and/or storage.

The system 20 also includes a gas analyser 33 for detecting the concentration of the component(s) in stream 28, thereby helping to ensure a specified concentration of the component(s) in stream 28 by, for example, sending one or more signals (not shown) to the control valve 24 for closing flow of the fluid feed 21 to one adsorption chamber and directing the fluid feed 21 to another adsorption chamber. The signals may also change the state of swing apparatus 29 and / or alter the purge fluid 31 flow rate and the time taken for desorption.

This system 20 is suitable for capturing CO₂ from the flue gas of power stations or capturing CH₄ from ventilation gas from coal mines. The system may also be useful in the purification of natural gas and mine drainage gas by removing CO₂ and possible other gaseous components from these gases to increase the CH₄ concentration of the gases. The treated gases having increased CH₄ content may then find use as fuels.

Furthermore, in situations where the gas streams to be treated have relatively high particulate concentration, more particularly high dust content, substantially uninhibited flow of the gas stream through the article 10 may be achieved due to the bores 12 extending through the article which are aligned with the flow of the gas stream. This is because the dust particles, or other particulate matter, can flow through the bores 12 in the body portion 11 of the article 10 without causing significant blockages. In addition, this system 20 can be used to produce concentrated streams 32 of CH₄ and/or CO₂ from a fluid feed 21 in which these components could be highly diluted (e.g. less than 1% for the CH₄ in mine ventilation air). Such concentrated streams 32 can be successfully sequestrated or utilised as mentioned above.

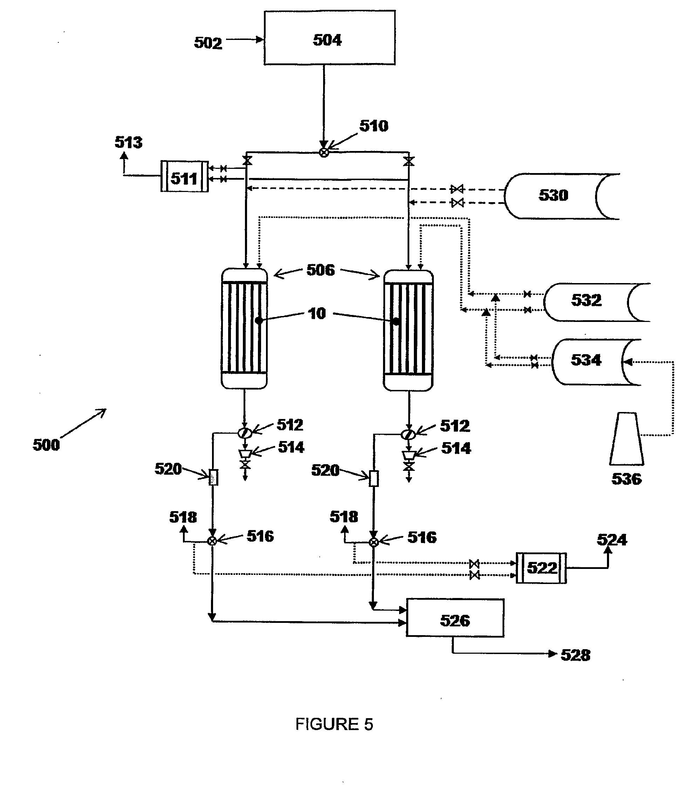

Figure 5 depicts a preferred system 500 of the invention with an integrated thermal swing apparatus. During operation, a fluid feed 502 is optionally passed through a pre-treatment stage 504 before being directed via an inlet control valve 510 to one of the adsorption chambers 506 containing an article 10. Optionally, a gas analyser 511 and a vent 513 are used to analyse the constituents and their concentration in the feed 502. The feed 502 passes through the chamber 506. Components that are not adsorbed by the article 10 pass through a particle separator 512 and into either a hopper 514 or through an outlet control valve 516 whereby ventilation from the system occurs at a vent 518.

A back pressure regulator 520 may also be included between the separator 512 and valve 516 to prevent backflow of unadsorbed components into the chamber 506 and increase the pressure inside the chamber 506, if required. Another gas analyser 522 with a vent 524 may also be connected to the vent 518 in order to measure the contents of the unadsorbed components. As the article 10 approaches saturation, the adsorption rate decreases. At a certain predetermined low level of adsorption, the inlet control valve 510 closes flow of the fluid feed 502 to that adsorption chamber and directs it to another. At the same time the thermal swing device 532 is activated. The device 532 preferably includes a heat source such as a hot flue gas which passes through or over article 10 thereby causing an increase in temperature with concomitant desorption of the captured component(s). Optionally, a source of purge fluid 530 is provided to flush the desorbed component(s) from the chamber 506. Separator 512 and valve 516 subsequently direct the concentrated component(s) stream to a common chamber 526 where the component(s) can be stored or directed through line 528 to a further system (not shown) for sequestration and/or use.

If desired, after desorption the temperature of article 10 may be lowered under the influence of a coolant source provided by cooling medium 534 and cooling tower 536. Any suitable coolant may be utilised, for example water, nitrogen, helium, argon, air or condensed gases. The article 10 is then ready to receive a fresh fluid feed 502. Ideally, the process operates continuously so that one chamber is receiving the fluid feed 502 while the other chamber is undergoing desorption of captured components.

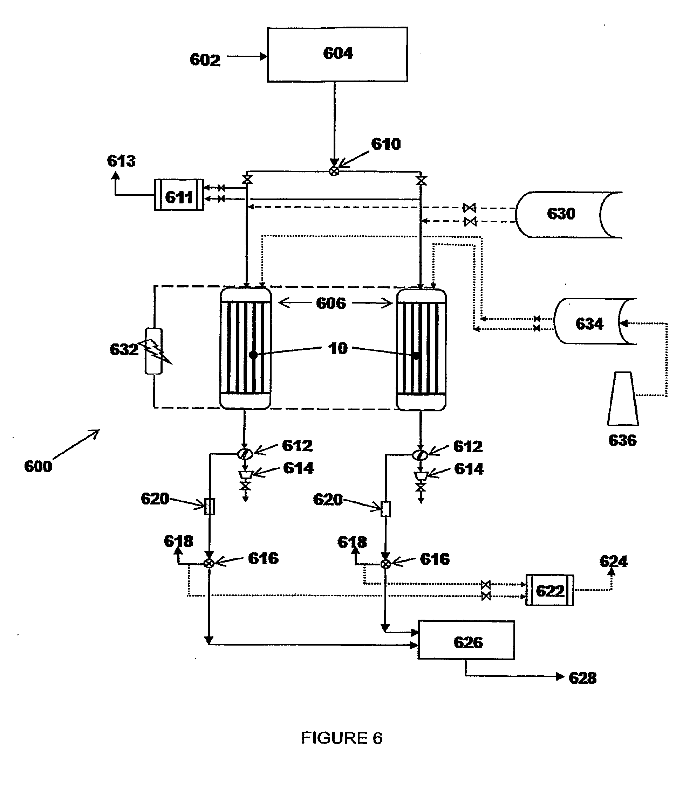

Figure 6 portrays another preferred system 600 of the invention with an integrated electrical swing apparatus. A fluid feed 602 may again undergo a pre-treatment stage 604 before passing through an inlet control valve 610 into an adsorption chamber 606 containing an article 10. Unadsorbed components pass through the chamber and are expunged from the system via hopper 614 or vent 618 under the influence of particulate separator 612 and outlet control valve 616. A back pressure regulator 620 may also be present. Gas analysers 611, 622 with vents 613, 624 are optionally included for measuring the constituents of the feed 602 and unadsorbed components passing through vent 618. As the article 10 approaches saturation, the concentration of the captured component passing through vent 618 begins to increase. The increased concentration is measured by gas analyser 622 which in turn sends a signal (not shown) to swing device 632. This signal activates swing device 632 and an electrical current is passed through article 10. This imparts a polarity change across article 10 resulting in desorption of the captured component(s). An increase in temperature of the article may accompany the polarity change and assist desorption. At the same time, the inlet control valve 610 redirects flow of the fluid feed 602 to another adsorption chamber. Optionally, a source of purge fluid 630 is also provided to assist desorption. The desorbed components are either stored in common chamber 626 or directed through line 628 to a further system (not shown) for sequestration and/or use. The temperature of article 10 may also be lowered under the influence of a coolant source provided by cooling medium 634 and cooling tower 636. This may occur simultaneously with or immediately following operation of the electrical swing device. Preferably however, the temperature is lowered prior to re-introduction of fluid feed 602.

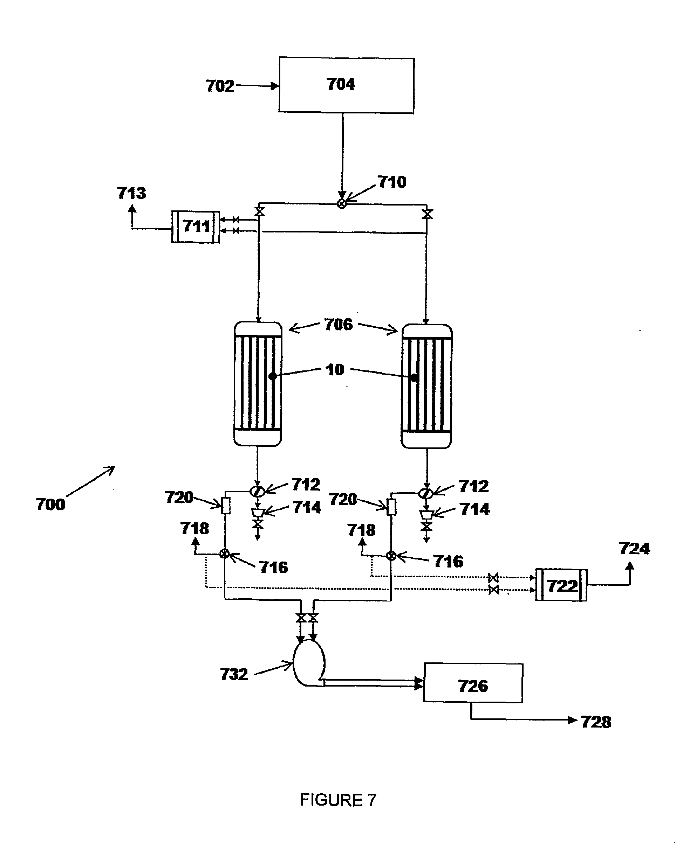

Figure 7 illustrates yet another preferred system 700 of the invention with an integrated vacuum swing apparatus. Optionally, a fluid feed 702 undergoes a pre-treatment stage 704 before passing through an inlet control valve 710 into an adsorption chamber 706 containing an article 10. Unadsorbed components pass through the chamber and are expunged via particulate separator 712 into hopper 714 or via back pressure regulator 720 and outlet control valve 716 through vent 718. Gas analysers 711, 722 with associated vents 713, 724 are optionally included for measuring the constituents of the feed 702 and unadsorbed components passing through vent 718. As the article 10 approaches saturation, the inlet control valve 710 redirects flow of the fluid feed 702 to another adsorption chamber. Pressure swing device 732 is then activated causing a pressure change in chamber 706. Preferably, the pressure swing device is a vacuum pump which results in lowering of the pressure in chamber 706 and desorption of the captured component(s) from article 10. The components are then either stored in common chamber 726 or directed through line 728 to a further system (not shown) for sequestration and/or use. Advantageously, desorption of the components under the influence of a vacuum pump simultaneously renders the article 10 ready to receive fresh fluid feed 702.

As discussed above, the preferred system of the invention illustrated in Figure 5 contains a thermal swing device for heating the adsorbent article and (optionally) a means for lowering the temperature of the article either during or immediately following completion of the desorption process. The means for raising or lowering the temperature may also be incorporated into the system of Figure 6. Such heating and/or cooling may be effected by passing a heat transfer fluid over the adsorption chamber containing the article or the outside of the article contained within the chamber.

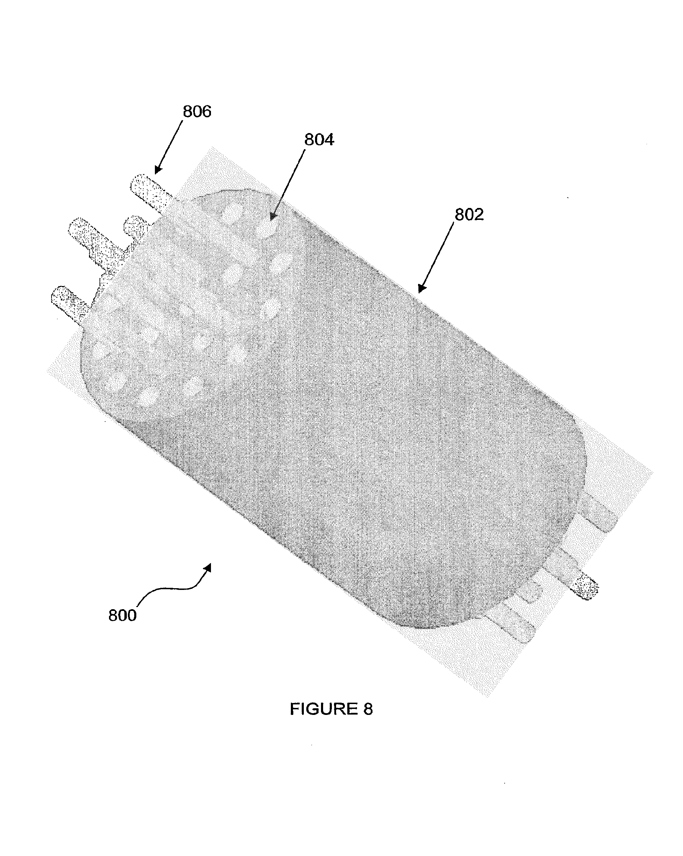

An alternative embodiment 800 for heating and/or cooling the article is illustrated in Figure 8. In this embodiment, a heat transfer fluid is passed through conduits 806 that are located in some of the bores 804 of the article 802. Passing the heat transfer fluid through the conduits 806 of the article 802 may eliminate dilution of the captured component(s) and will avoid wetting the article when liquid heat transfer fluids such as water are used. This results in an improved yield of the captured components and/or reduces the process time required. Any hot or cold substance known to function as a heat transfer fluid will suffice for use in the embodiment 800. For example hot flue gases, water, air or condensed gases may be utilised. Furthermore, the heat transfer fluid may be passed through at least some of the conduits 806 simultaneously with or immediately following the capture of one or more desired components from a fluid. For example, the article may be cooled with a heat transfer fluid concurrently with adsorption of a desired component from a fluid. Once adsorption is complete, the article may be heated with an alternative heat transfer fluid to assist in desorption of the one or more captured components.

Although not illustrated, the article may also be of annular form, including a plurality of bores in the annular ring. In that embodiment, a central conduit may be provided that passes through the annulus and that is in contact with the inner surface of the annulus. In a similar vein to embodiment 800, the conduit may be used to pass heat exchange fluid into indirect contact with the article to effect heating or cooling of the article.

### Examples

Articles for capturing at least one component from a fluid, specifically, CO₂ and/or CH₄ have been successfully prepared in the laboratory by vacuum moulding, drying, curing, carbonization and activation (thermal or chemical) in accordance with the flow sheet of Figure 3.

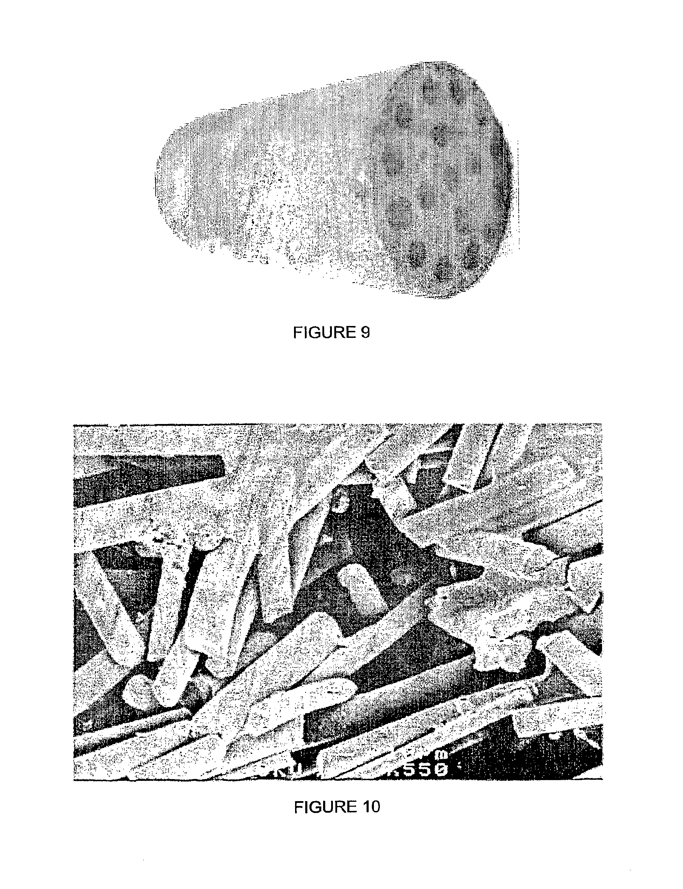

Figure 9 shows a photograph of a prepared article, otherwise known as a honeycomb carbon fibre monolith adsorbent. The depicted article has an overall diameter of 31mm and has 17 bores extending through the body portion, each with a diameter of 3.1 mm.

Figure 10 provides a scanning electron microscope (SEM) image of the body portion of one of the articles. The fibres are about 10 to 20 µm in diameter and are bonded with one another at various contact points. The void spaces between the fibres are, however, much larger. Thus, an open structure is formed which allows free flow of fluids through the material and ready access to the carbon fibre surface.

Tests have been carried out on the articles to identify their surface area, pore characteristics and CO₂ and CH₄ adsorption capacities, using a Tristar analyser (Micromeritics). All the gases used for testing are of research grade (more than 99.99% purity). Table 2 gives the characteristics of various articles.

**Table 2. Characteristics and CO₂, CH₄ adsorption capacities of various articles prepared in accordance with the invention (binder-phenolic resin, carbon fibre-coal tar pitch based, carbonization at 650°C for 1 hr, activation at 950°C for 1 hr).**

| Fibre to Binder Ratio | Bum-off, % | BET- N₂ Surface Area, m²/g | Pore volume, cm³/g | DA-Pore width, nm | CO₂ Surface Area at 0°C, m²/g | CO₂ Uptake at 25°C and 760 mmHg, %/g | CH₄ Uptake at 25°C and 760 mmHg, %/g |
|---|---|---|---|---|---|---|---|
| 4:1 | 24.2 | 703.3 | 0.3635 | 1.55 | 413.2 | 11.6 | 2.1 |
| 2:1 | 41.4 | 1312.2 | 0.9018 | 2.416 | 422.1 | 12.3 | 1.8 |
| 1:1 | 31.2 | 831.2 | 0.4706 | 1.828 | 425.3 | 12.0 | 2.0 |
| 1:2 | 28.8 | 855.3 | 0.4685 | 1.609 | 436.2 | 13.0 | 2.0 |
| 1:4 | 39.9 | 976.9 | 0.5131 | 1.66 | 464.9 | 13.0 | 2.2 |

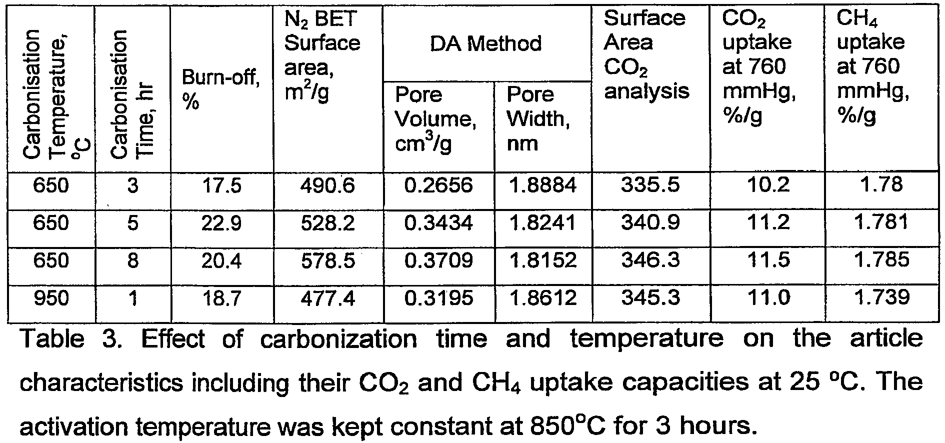

It was observed that both carbonisation time and temperature had little effect on the characteristics of the article. In particular, burn-off, surface area, pore width, and CO₂ and CH₄ adsorption capacities showed only minor changes under different carbonisation conditions.

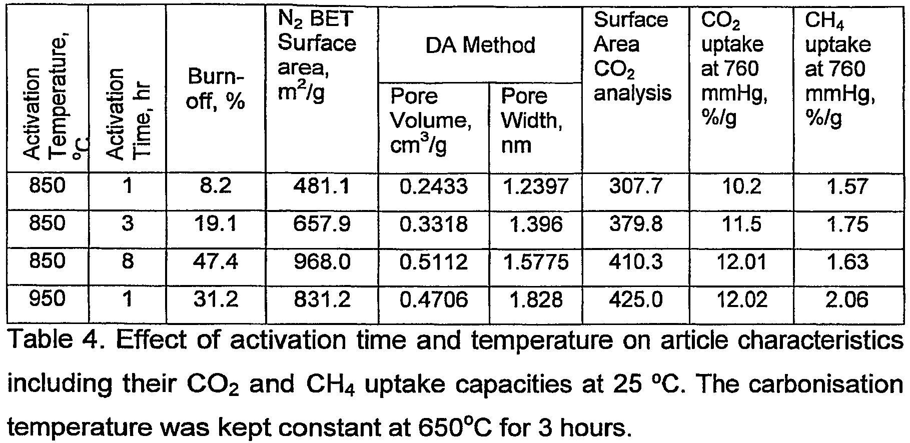

As evidenced in Table 4, varying the activation parameters had a significant effect on the characteristics of the article. An increase in activation time produced a linear increase in the N₂ BET surface area, pore volume and pore width. The surface area (based on CO₂ analysis) increased as the activation time increased. However, in relation to CO₂ and CH₄ adsorption capacity, it would be preferable to perform the activation step at a higher temperature (for example 950°C) for a shorter duration (1 hour), rather than at lower temperature (such as 850°C) for a longer duration (8 hours).

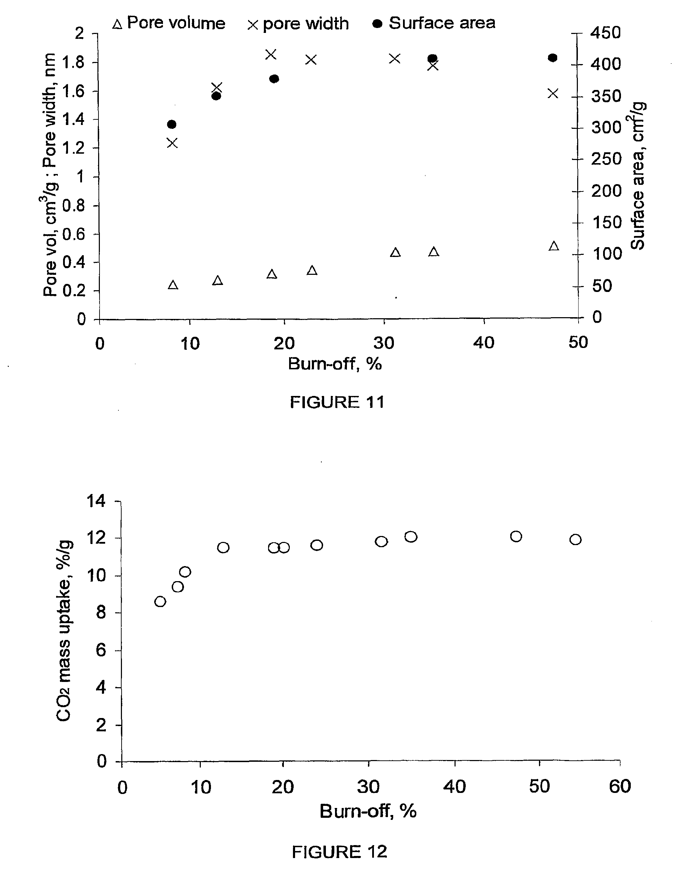

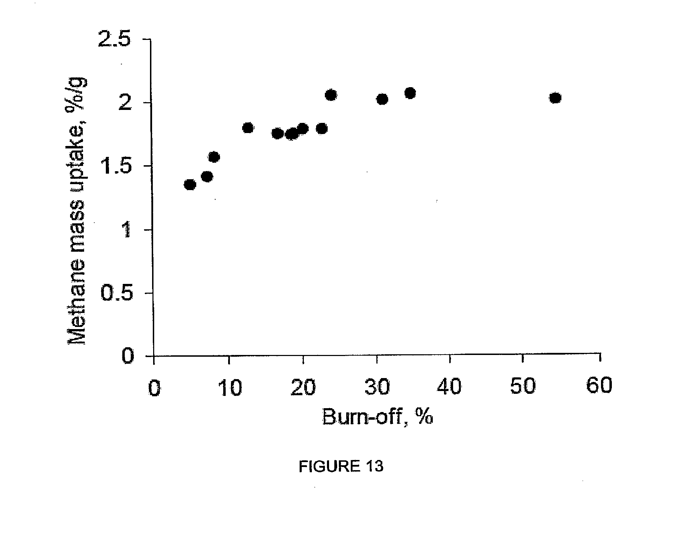

The effect of burn-off was studied to evaluate the characteristics of the article and its CO₂ adsorption capacity. Figure 11 shows the variation of surface area and pore characteristics with burn-off percentage of articles prepared using coal tar pitch based carbon fibre. Figures 12 and 13 show the effect of burn-off on CO₂ and CH₄ mass uptake respectively.

Activation of the composites resulted in the formation and development of pores. However, activation also affected the weight loss (burn-off) in the material. An increase in the degree of burn-off was found to initially increase the pore volume, pore width and surface area (Figure 11). Although this produced an initial increase in the CO₂ and CH₄ adsorption capacities, further increases in burn-off percentages did not improve either the CO₂ or CH₄ adsorption capacities (Figures 12 and 13). In fact, the pore size began to decrease and there was no further increase in pore volume and surface area.

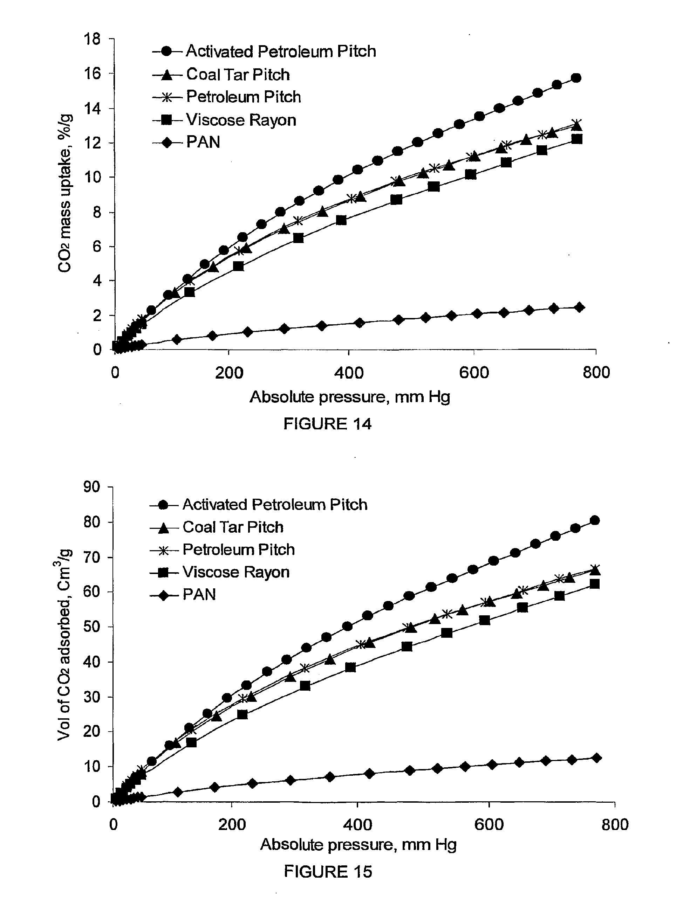

Figures 14 and 15 show the CO₂ adsorption capacity in terms of mass uptake (Figure 14) and volume of gas adsorbed (Figure 15) at 25°C for articles prepared from different fibres. All other preparation conditions were kept constant. Clearly the adsorptive characteristics of the articles were dependent on the choice of carbon fibre. Activated petroleum pitch based articles displayed the highest CO₂ adsorption capacity. Articles from PAN based fibre showed the lowest amount of CO₂ adsorption.

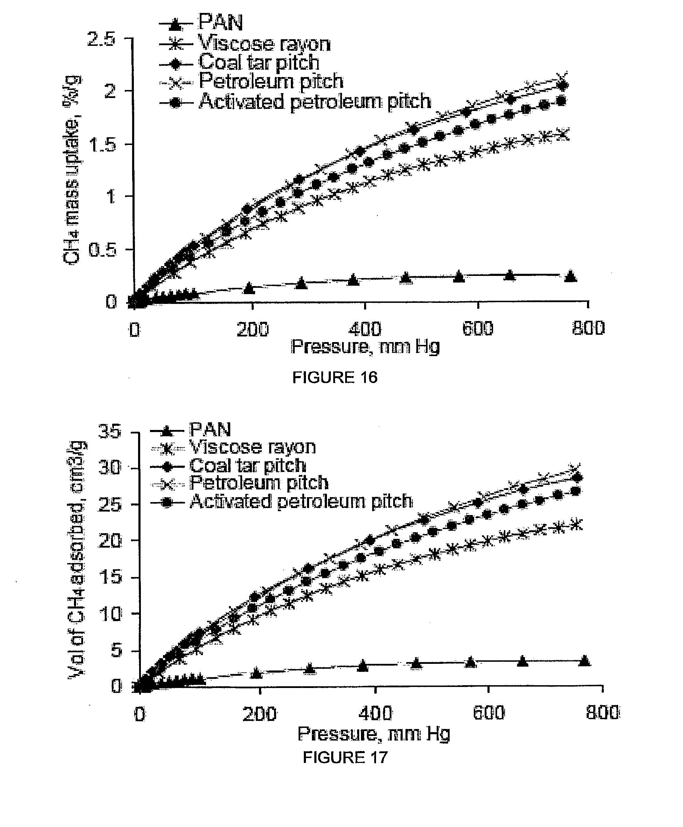

Figures 16 and 17 show the CH₄ adsorption capacity in terms of mass uptake (Figure 16) and volume of gas adsorbed (Figure 17) for articles prepared from different fibres. All other preparation conditions except the type of carbon fibre were kept constant. The adsorptive characteristics of the articles depended on the choice of carbon fibre. Petroleum pitch based articles displayed the highest CH₄ adsorption capacity. In contrast, articles based on PAN fibre had the lowest amount of CH₄ adsorption.

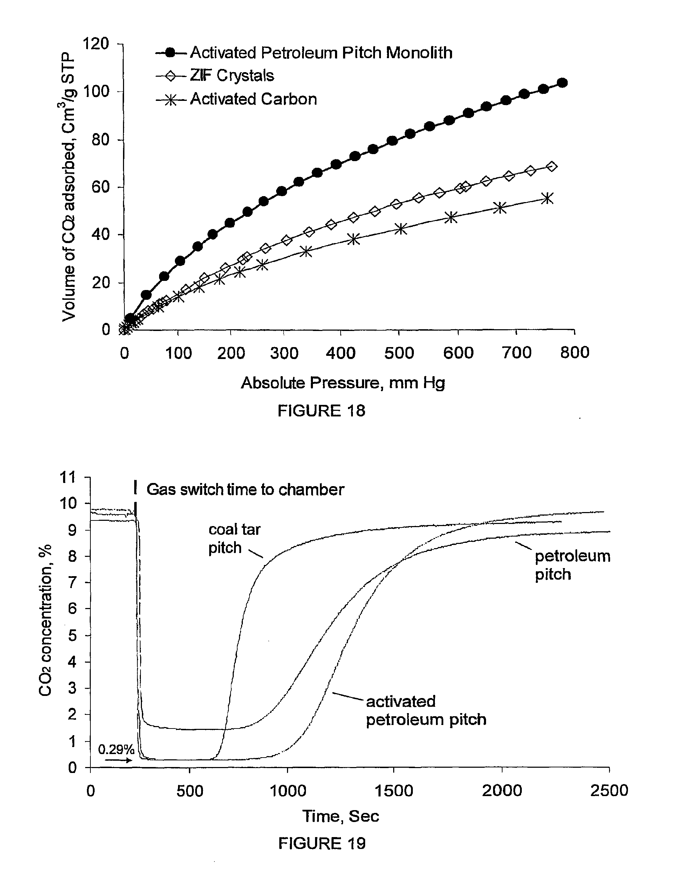

Figure 18 shows a comparison of CO₂ adsorption performance at 0 °C (based on the volume of CO₂ adsorbed per gram of material) between an activated pitch based article of the present invention, a metal-organic crystal material known as a zeolitic imidazolate framework (ZIF) as disclosed by Banerjee R. et al., Science, 2008, 319, pages 939-943, and conventional activated carbon pellets. The results indicated that the CO₂ adsorption efficiency of the activated pitch based article was twice that of activated the carbon pellets and 1.5 times greater than the ZIF.

### Adsorption kinetics

Experiments to measure adsorption kinetics were performed. Simulated gas mixtures were passed through the article and their concentration upon exit of the material was recorded with respect to time. Characteristics of the three articles selected for the kinetic experiments are shown in Table 6 and the simulated gas mixtures are given in Table 7.

**Table 6. Characteristics of articles used in the adsorption breakthrough test.**

| Type of carbon fibre precursor | | Total weight of sample, g | Total length of sample, cm | N₂ BET surface area, m²/g | DA Method | |
|---|---|---|---|---|---|---|
| | | | | | Pore size, nm | Pore volume, cm³/g |
| Activated petroleum pitch | Sample 1 | 31.4 | 17.9 | 1305 | 1.85 | 0.68 |
| | Sample 2 | | | 1242 | 1.75 | 0.64 |
| Petroleum pitch | Sample 1 | 34.4 | 17.5 | 1352 | 2.14 | 0.61 |
| | Sample 2 | | | 1017 | 2.05 | 0.7 |
| Coal tar pitch | Sample 1 | 34.8 | 17.5 | 855 | 1.6 | 0.46 |
| | Sample 2 | | | 1097 | 1.7 | 0.56 |

**Table 7. Composition of simulated flue gas and ventilation air methane (VAM) mixtures for adsorption kinetic experiments.**

| Gas Type | Composition % | | | |
|---|---|---|---|---|
| | CO₂ | CH₄ | O₂ | N₂ |
| Simulated flue gas | 10 | - | 5 | 85 |
| VAM1 | 0.14 | 0.592 | 19.97 | 79.298 |
| VAM2 | 0.399 | 0.997 | 20.01 | 78.594 |

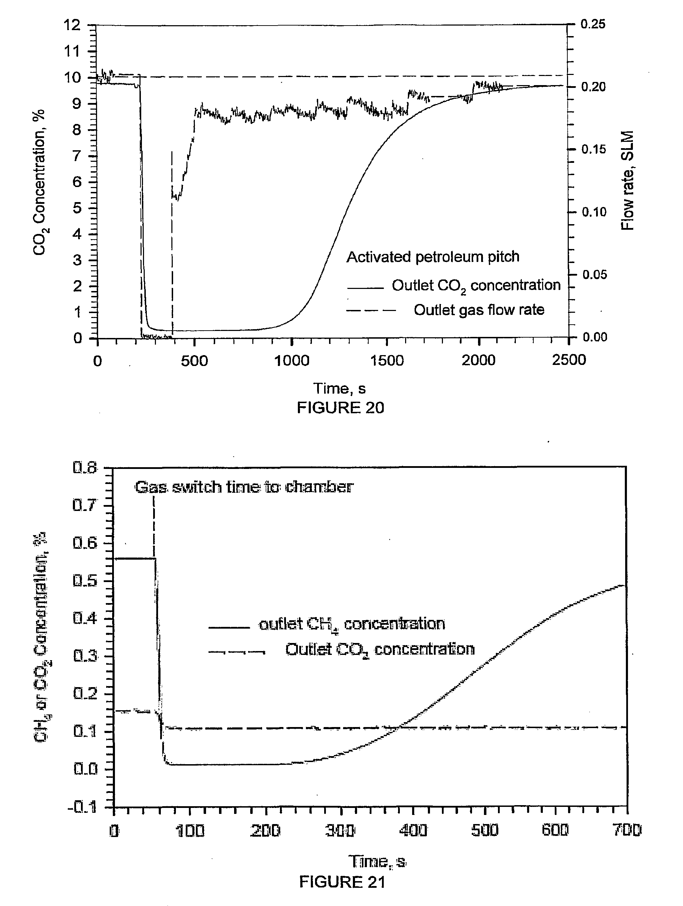

Figure 19 shows a comparison of the adsorption kinetics of the three different articles. The experiments were conducted with simulated flue gas mixture at room temperature (25°C) at atmospheric pressure with an inlet gas mass flow of rate of 0.2 standard litres per minute. Fourier transform infrared spectroscopy (Nicolet 6700 - ThermoFisher Scientific, USA) was used to monitor the outlet gases. Figure 19 indicates that the activated petroleum pitch based article produced the best performance in terms of maximum CO₂ removal efficiency (97%). The CO₂ concentration of almost 10% in the inlet gas was reduced to about 0.29% after passing through the activated petroleum pitch based article. This remained constant for over 10 minutes, after which breakthrough (the point at which the target gas concentration starts to rise in the effluent) occurred. After 40 minutes the entire material was saturated (i.e. the outlet concentration reached the inlet concentration). Although the coal tar pitch based article and the petroleum pitch based articles had similar CO₂ adsorption capacities (the latter displayed a slightly greater capacity), the efficiency of CO₂ removal by the coal tar pitch based article was slightly greater (96.8%) than the petroleum pitch based articles (85%). However, the petroleum pitch based article displayed a longer breakthrough and saturation time. Figure 20 further presents the outlet flow rate profile when the activated petroleum pitch based article was used in the experiment with simulated flue gas mixture at room temperature (25°C) at atmospheric pressure, and with an inlet gas mass flow of rate of 0.2 standard litres per minute.

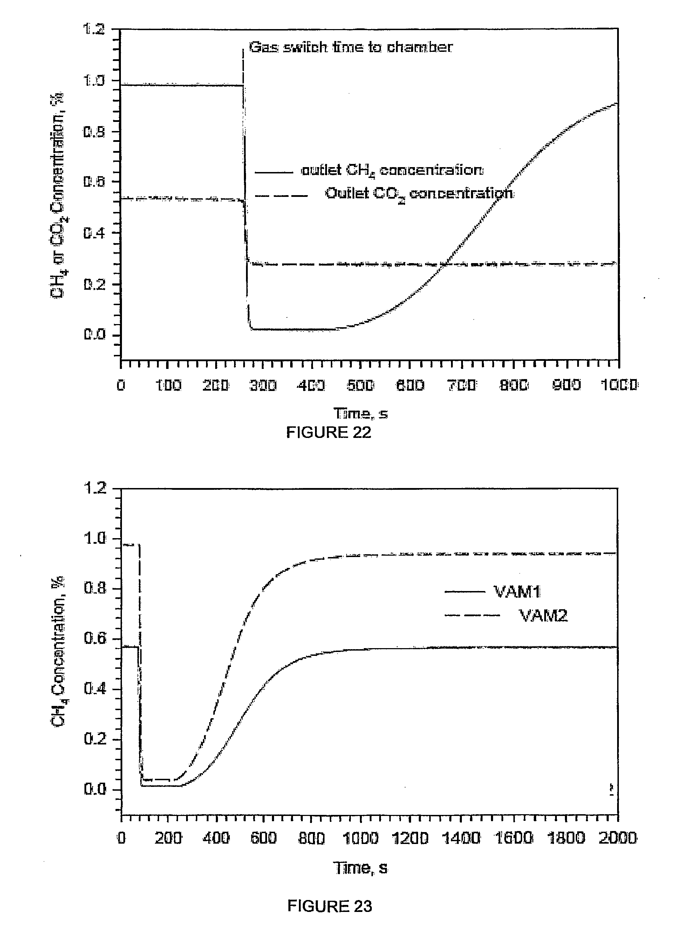

Figures 21 and 22 show the adsorption kinetics of petroleum pitch based article under the influence of the VAM1 and VAM2 gas mixtures respectively at atmospheric pressure and ambient temperature (25°C). The inlet gas flow rate was maintained at 0.2 standard litres per minute. Figures 20 and 21 show that the article prepared from petroleum pitch based carbon fibres was able to achieve a CH₄ adsorption of more than 95% from both the simulated mine ventilation air mixtures. CO₂ adsorption was about 26% and 47 % respectively for VAM1 (Figure 21) and VAM2 (Figure 22).

With respect to the coal tar pitch based article, it was found that a CH₄ adsorption efficiency of 96 to 97% was achieved under the influence of VAM1 and VAM2 (Figure 23). Nevertheless, the CH₄ adsorption efficiency, breakthrough and saturation times were all less compared to the petroleum pitch based and activated pitch based adsorbents.

In the specification the term "comprising" shall be understood to have a broad meaning similar to the term "including" and will be understood to imply the inclusion of a stated integer or step or group of integers or steps but not the exclusion of any other integer or step or group of integers or steps. This definition also applies to variations on the term "comprising" such as "comprise" and "comprises".

## Claims

1. An article for extracting a component from a fluid stream, the article including a body portion having a plurality of bores extending therethrough, wherein the body portion includes internal walls that define the bores and that separate the bores from one another, the bores facilitating the flow of the fluid stream through the body portion in use, wherein the body portion is a honeycomb monolith structure formed from a slurry containing a mixture of a binder and carbon nanotubes, and wherein the bores are formed subsequent to formation of the body portion or formed, during formation of the body portion by extrusion or moulding of the body portion, wherein the width of each bore is from 1mm to 40mm and wherein the width of the internal walls in the range of from 1mm to 150mm.

2. The article according to claim 1, wherein the bores are regular in cross sectional shape and extend from one face of the body portion to an opposing face of the body portion.

3. The article according to claim 1 or 2, wherein the mixture further comprises carbon fibres.

4. The article according to claim 3, wherein the carbon fibres are pitch based, activated pitch based, polyacrylonitrile (PAN) based, rayon (viscose) based or any combination thereof.

5. The article according to claim 3 or 4, wherein the carbon fibres are from about 5µm to about 5000µm in length and/or have a diameter of from about 5µm to about 50µm.

6. The article according to any one of claims 1 to 5, wherein the binder is a resin selected from phenolic resin, polyethylene, epoxy resin, vinyl ester resin or any combination thereof.

7. The article according to claim 6, wherein the ratio of carbon fibre to binder in the mixture used to form the body portion is from about 9:1 to 1:9.

8. The article according to any one of claims 1 to 7, wherein the carbon nanotubes are single walled or multiwalled having a diameter of from about 10nm to about 100nm and a length of from about 100µm to about 2500µm.

9. A system for extracting a component from a fluid stream, the system including:
at least one article in accordance with any one of claims 1 to 8; and
a swing apparatus for effecting a change in condition across the at least one article to facilitate adsorption of the component from the fluid stream or desorption of the component from the at least one article.

10. The system according to claim 9, wherein the component to be extracted includes CO₂ from flue gas derived from a coal fired power station or CH₄ from ventilation air derived from a coal mine.

11. The system according to claim 9 or 10, including two articles for extracting the component from the liquid stream, each of the two articles cycling, offset relative to each other, between an adsorption stage and a desorption stage, or including at least three articles for extracting the component from the fluid stream, each of the three articles cycling, offset relative to each other, between an adsorption stage, desorption stage and intermediate stage.

12. The system according to any one of claims 9 to 11, including a vacuum pump adapted to create a pressure drop over the article in order to effect a pressure swing across the at least one article to facilitate desorption of the component.

13. The system according to any one of claims 9 to 12, wherein each of said articles includes at least one conduit extending therethrough which facilitates heat transfer between the articles and a heat transfer fluid flowing through the conduits, wherein the heat transfer fluid is preferably a hot flue gas or other waste heat source.

14. A method of extracting CO₂ from flue gas, the method including: passing the flue gas through an article in accordance with any of claims 1 to 8, whereby CO₂ is adsorbed onto inner surfaces of the bores of the article; and
desorbing the CO₂ from the inner surfaces of the bores of the article and recovering the desorbed CO₂.

15. The method of claim 14, wherein the method is a method of extracting CO₂ from flue gas derived from a coal fired power station.

16. A method of extracting CH₄ from ventilation air derived from a coal mine or from fugitive methane emission streams originating from coal, oil and gas production, transport, mining, agriculture, waste disposal, livestock, or land use, the method including:
passing the ventilation air through an article in accordance with any of claims 1 to 8, whereby CH₄ is adsorbed onto inner surfaces of the bores of the article; and
desorbing the CH₄ from the inner surfaces of the bores of the article and recovering the desorbed CH₄.

17. A method of forming an article for extracting a component from a fluid stream, the method including:
forming a slurry including a binder and carbon nanotubes; and
shaping the slurry into a body portion in the form of a honeycomb monolith structure having a plurality of bores extending therethrough, wherein the body portion includes internal walls that define the bores and that separate the bores from one another;
wherein the width of each bore is from 1 mm to 40mm and wherein the width of the internal walls in the range of from 1 mm to 150mm.

## Patentansprüche

1. Gegenstand zur Extraktion einer Komponente aus einem Fluidstrom, wobei der Gegenstand einen Körperabschnitt einschließt, der eine Vielzahl von Bohrungen aufweist, die sich dort hindurch erstrecken, wobei der Körperabschnitt Innenwände einschließt und welche die Bohrungen voneinander trennen, wobei die Bohrungen den Fluss des Fluidstroms durch den in Gebrauch befindlichen Körperabschnitt erleichtern, wobei der Körperabschnitt eine monolithische Wabenstruktur ist, die aus einer Schlämme gebildet ist, die eine Mischung aus einem Bindemittel und Kohlenstoffnanoröhren enthält und, wobei die Bohrungen im Anschluss an die Bildung des Körperabschnitts gebildet sind oder während der Bildung des Körperabschnitts durch Extrusion oder Formung des Körperabschnitts gebildet sind, wobei die Breite jeder Bohrung von 1 mm bis 40 mm beträgt und, wobei die Breite der Innenwände im Bereich von 1 mm bis 150 mm liegt.

2. Gegenstand nach Anspruch 1, wobei die Bohrungen in der Querschnittsform gleichmäßig sind und sich von einer Fläche des Körperabschnitts zu einer gegenüberliegenden Fläche des Körperabschnitts erstrecken.

3. Gegenstand nach Anspruch 1 oder 2, wobei die Mischung ferner Kohlenstofffasern umfasst.

4. Gegenstand nach Anspruch 3, wobei die Kohlenstofffasern pech-basiert, aktiviert pech-basiert, Polyacrylnitril (PAN) basiert, Rayon (Viskose) basiert oder irgendeine Kombination davon sind.

5. Gegenstand nach Anspruch 3 oder 4, wobei die Kohlenstofffasern von ca. 5 µm bis ca. 5000 µm in der Länge sind und/oder einen Durchmesser von ca. 5 µm bis ca. 50 µm aufweisen.

6. Gegenstand nach irgendeinem der Ansprüche 1 bis 5, wobei das Bindemittel ein Harz ist, das aus Phenolharz, Polyethylen, Epoxidharz, Vinylesterharz oder irgendeiner Kombination davon selektiert ist.

7. Gegenstand nach Anspruch 6, wobei das Verhältnis von Kohlenstofffaser zu Bindemittel in der Mischung, die zur Bildung des Körperabschnitts benutzt wurde, von 9:1 bis 1:9 beträgt.

8. Gegenstand nach irgendeinem der Ansprüche 1 bis 7, wobei die Kohlenstoffnanoröhren einwandig oder mehrwandig sind und einen Durchmesser von ca. 10 nmbis ca. 100 nm und eine Länge von ca. 100 µm bis ca. 2500 µm aufweisen.

9. System zur Extraktion einer Komponente aus einem Fluidstrom, wobei das System einschließt:
Wenigstens einen Gegenstand in Übereinstimmung mit irgendeinem der Ansprüche 1 bis 8; und
eine Wechselvorrichtung zum Herbeiführen einer Änderung im Zustand über den wenigstens einen Gegenstand, um Adsorption der Komponente aus dem Fluidstrom oder Desorption der Komponente aus dem wenigstens einen Gegenstand zu erleichtern.

10. System nach Anspruch 9, wobei die zu extrahierende Komponente CO₂ aus Rauchgas, das von einem kohlebefeuerten Kraftwerk abstammt oder CH₄ aus Entlüftungsluft, die von einem Kohlebergwerk abstammt, einschließt.

11. System nach Anspruch 9 oder 10, das zwei Gegenstände zur Extraktion der Komponente aus dem Flüssigkeitsstrom einschließt, wobei jeder der zwei Gegenstände, versetzt relativ zueinander, zwischen einer Adsorptionsstufe und einer Desorptionsstufe im Zyklus arbeitet, oder wenigstens drei Gegenstände zur Extraktion der Komponente aus dem Fluidstrom einschließt, wobei jeder der drei Gegenstände, versetzt relativ zueinander, zwischen einer Adsorptionsstufe, Desorptionsstufe und einer Zwischenstufe im Zyklus arbeiten.

12. System nach irgendeinem der Ansprüche 9 bis 11, das eine Vakuumpumpe einschließt, die angepasst ist, einen Druckabfall über dem Gegenstand zu schaffen, um einen Druckwechsel über den wenigstens einen Gegenstand zu bewirken, um Desorption der Komponente zu erleichtern.

13. System nach irgendeinem der Ansprüche 9 bis 12, wobei jeder der genannten Gegenstände wenigstens einen Leitkanal, der sich dort hindurch erstreckt, welcher Wärmeübertragung zwischen den Gegenständen erleichtert und ein Wärmeübertragungsfluid, das durch die Leitkanäle strömt, einschließt, wobei das Wärmeübertragungsfluid vorzugsweise ein warmes Rauchgas oder eine andere Abgasquelle ist.

14. Verfahren zur Extraktion von CO₂ aus Rauchgas, wobei das Verfahren einschließt: Leiten des Rauchgases durch einen Gegenstand in Übereinstimmung mit irgendeinem der Ansprüche 1 bis 8, wodurch CO₂ auf die inneren Oberflächen der Bohrungen des Gegenstands adsorbiert wird; und
Desorbieren des CO₂ von den inneren Oberflächen der Bohrungen des Gegenstands und Wiedergewinnen des desorbierten CO₂.

15. Verfahren nach Anspruch 14, wobei das Verfahren ein Verfahren zur Extraktion von CO₂ aus Rauchgas ist, das aus einem kohlebefeuerten Kraftwerk abstammt.

16. Verfahren zur Extraktion von CH₄ aus Entlüftungsluft, die von einem Kohlebergwerk oder von flüchtigen Methanemissionsströmen abstammt, deren Ursprung Kohle-, Öl- und Gasproduktion, Transport, Bergbau, Landwirtschaft, Abfallentsorgung, Vieh, oder Landnutzung ist, wobei das Verfahren einschließt:
Leiten der Entlüftungsluft durch einen Gegenstand in Übereinstimmung mit irgendeinem der Ansprüche 1 bis 8, wodurch CH₄ auf die inneren Oberflächen der Bohrungen des Gegenstands adsorbiert wird; und
Desorbieren des CH₄ von den inneren Oberflächen der Bohrungen des Gegenstands und Wiedergewinnen des desorbierten CH₄.

17. Verfahren zum Formen eines Gegenstands zur Extraktion einer Komponente aus einem Fluidstrom, wobei das Verfahren einschließt:
Bilden einer Schlämme, die ein Bindemittel und Kohlenstoffnanoröhren einschließt; und
Formen der Schlämme zu einem Körperabschnitt in Form einer monolithischen Wabenstruktur mit einer Vielzahl von Bohrungen, die sich dort hindurch erstrecken, wobei der Körperabschnitt Innenwände einschließt, welche die Bohrungen definieren und welche die Bohrungen voneinander trennen;
wobei die Breite jeder Bohrung von 1 mm bis 40 mm beträgt und, wobei die Breite der Innenwände im Bereich von 1 mm bis 150 mm liegt.

## Revendications

1. Article pour extraire un composant d'un écoulement de fluide, l'article comprenant une partie de corps présentant plusieurs alésages le traversant, la partie du corps comprenant des parois internes qui définissent les alésages et qui séparent les alésages l'un de l'autre, les alésages facilitant l'écoulement du fluide à travers la partie de corps utilisée, cette partie de corps ayant une structure monolithique en nid d'abeille formée d'une boue contenant un mélange d'un liant et de nanotubes de carbone, et les alésages étant formés suite à la formation de la partie de corps ou étant formés au cours de la formation de la partie de corps par extrusion ou moulage de la partie de corps, la largeur de chaque alésage allant de 1 mm à 40 mm et la largeur des parois internes se situant dans la plage allant de 1 mm à 150 mm.

2. Article selon la revendication 1, les alésages étant de forme régulière transversale et s'étendant d'une face de la partie de corps jusqu'à une face opposée de la partie de corps.

3. Article selon la revendication 1 ou 2, le mélange comprenant en outre des fibres de carbone.

4. Article selon la revendication 3, les fibres de carbone étant à base de brai, à base de brai activé, à base de polyacrylonotrile (PAN), à base de rayonne (viscose) ou d'une combinaison quelconque de ceux-ci.

5. Article selon la revendication 3 ou 4, les fibres de carbone ayant une longueur allant d'environ 5 µm à environ 5000 µm et/ou ayant un diamètre allant d'environ 5 µm à environ 50 µm.

6. Article selon l'une quelconque des revendications 1 à 5, le liant étant une résine sélectionnée parmi la résine phénolique, le polyéthylène, la résine époxy, la résine vinylester ou une combinaison quelconque de ceux-ci.

7. Article selon la revendication 6, le rapport de la fibre de carbone au liant dans le mélange utilisé pour former la partie de corps étant d'environ 9 :1 à 1 : 9.

8. Article selon l'une quelconque des revendications 1 à 7, les nanotubes de carbone étant monoparoi ou multiparois avec un diamètre allant d'environ 10 nm à environ 100 nm et une longueur allant d'environ 100 µm à environ 2500 µm.

9. Système d'extraction d'un composant d'un écoulement de fluide, le système comprenant :
au moins un article selon l'une quelconque des revendications 1 à 8 ; et
un dispositif de variation de pression pour réaliser un changement dans une condition dans le au moins un article afin de faciliter l'adsorption du composant depuis l'écoulement de fluide ou la désorption du composant depuis le au moins un article.

10. Système selon la revendication 9, dans lequel le composant à extraire comprend du CO₂ de gaz de combustion dérivé d'une usine thermique à houille ou du CH₄ d'air de ventilation dérivé d'une mine de charbon.

11. Système selon la revendication 9 ou 10, comprenant deux articles pour l'extraction du composant de l'écoulement liquide, chacun des deux articles étant exposé à un cyclage, à un décalage l'un par rapport à l'autre, entre : une étape d'adsorption et une étape de désorption, ou comprenant au moins trois articles pour l'extraction du composant de l'écoulement de fluide, chacun des trois articles étant exposés à un cyclage, à un décalage l'un par rapport à l'autre, entre une étape d'adsorption, une étape de désorption et une étape intermédiaire.

12. Système selon l'une quelconque des revendications 9 à 11, comprenant une pompe à vide adaptée pour créer une chute de pression dans l'article afin de réaliser une modulation en pression à travers le au moins un article dans le but de faciliter la désorption du composant.

13. Système selon l'une quelconque des revendications 9 à 12, chacun desdits articles comprenant au moins un conduit s'étendant à travers qui facilite le transfert thermique entre les articles et l'écoulement d'un fluide caloporteur à travers les conduits, le fluide caloporteur étant de préférence un gaz de combustion chaud ou une autre source de chaleur perdue.

14. Procédé d'extraction de CO₂ à partir d'un gaz de combustion, le procédé comprenant les étapes consistant à : faire passer le gaz de combustion à travers un article selon l'une quelconque des revendications 1 à 8, si bien que le CO₂ est adsorbé sur des surfaces internes des alésages de l'article ; et
désorber le CO₂ à partir des surfaces internes des alésages de l'article et récupérer le CO₂ désorbé.

15. Procédé selon la revendication 14, le procédé consistant à extraire du CO₂ à partir d'un gaz de combustion dérivé d'une usine thermique à houille.

16. Procédé d'extraction du CH₄ de l'air de ventilation dérivé d'une mine de charbon ou de courants d'émission de méthane fugitifs provenant de la production de charbon, de pétrole et de gaz, du transport, de l'abattage, de l'agriculture, de l'élimination de déchets, du bétail ou de l'utilisation de sols, le procédé comprenant les étapes consistant à :
faire passer l'air de ventilation à travers un article selon l'une quelconque des revendications 1 à 8, si bien que le CH₄ est adsorbé sur des surfaces internes des alésages de l'article ; et
désorber le CH₄ à partir des surfaces internes des alésages de l'article et récupérer le CH₄ désorbé.

17. Procédé de formation d'un article pour extraire un composant d'un écoulement de fluide, le procédé comprenant les étapes consistant à :
former une boue comprenant un liant et des nanotubes de carbone ; et
façonner la boue en une partie de corps sous la forme d'une structure monolithique en nid d'abeille ayant une pluralité d'alésages la traversant, la partie de corps comprenant des parois internes qui définissent les alésages et qui séparent les alésages l'un de l'autre ;
la largeur de chaque alésage allant d'environ 1 mm à 40 mm et la largeur des parois internes étant située dans une plage allant de 1 mm à 150 mm.
